# EUROPEAN PATENT APPLICATION

(11) **EP 4 376 341 A1**
(43) Date of publication of application: **29.05.2024**
(21) Application number: 21950418.0
(22) Date of filing: 19.07.2021
(51) Int. Cl.: H04L 5/00

(54) **COMMUNICATION METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2021/107201
(87) International publication number: WO 2023/000152

(57) **Abstract**

The embodiments of the present invention relate to the technical field of mobile communications. Provided are a communication method and apparatus, an electronic device, and a storage medium. The communication method is applied to an initiating end, and comprises: sending a target radio frame, wherein the target radio frame comprises a target identifier, and the target identifier comprises polling information indicating that an initiating end executes wireless local area network (WLAN) sensing. The embodiments of the present invention provide a manner for indicating polling, so as to implement WLAN sensing.

## Description

### FIELD

The present invention relates to the field of mobile communication technology, and particularly to a communication method and apparatus, an electronic device and a storage medium.

### BACKGROUND

With rapid development of mobile communication technology, wireless fidelity (Wi-Fi) technology has made great progress in transmission rate and throughput. At present, aspects such as bandwidth transmission of 320 MHz, aggregation and coordination of multiple frequency bands of the Wi-Fi technology are studied, and applied in scenarios such as video transmission, augmented reality (AR), virtual reality (VR), etc.

In the currently studied Wi-Fi technology, wireless local area network (WLAN) sensing technology may be supported, and applied in various scenarios such as location detection, proximity detection, and presence detection in dense environments such as home and business environments. In the WLAN sensing process, there is a need to provide a way of indicating a poll to realize the WLAN sensing.

### SUMMARY

In order to provide the way of indicating the poll to realizing the WLAN sensing, embodiments of the present invention provide a communication method and apparatus, an electronic device and a storage medium.

In an aspect, embodiments of the present invention provide a communication method, applied to an initiator, including: sending a target radio frame, where the target radio frame includes a target identification, and the target identification includes polling information for the initiator to perform wireless local area network (WLAN) sensing.

In another aspect, embodiments of the present invention provide a communication method, applied to a responder, including: receiving a target radio frame, where the target radio frame includes a target identification, and the target identification includes polling information for the responder to perform wireless local area network (WLAN) sensing.

In a further aspect, embodiments of the present invention provide a communication apparatus, applied to an initiator, including: a sending module configured to send a target radio frame, where the target radio frame includes a target identification, and the target identification includes polling information for the initiator to perform wireless local area network (WLAN) sensing.

In a further aspect, embodiments of the present invention provide a communication apparatus, applied to a responder, including: a receiving module configured to receive a target radio frame, where the target radio frame includes a target identification, and the target identification includes polling information for the responder to perform wireless local area network (WLAN) sensing.

Embodiments of the present invention also provide an electronic device, including: a memory, a processor and a computer program stored in the memory and executable on the processor. The computer program, when executed by the processor, causes the method as described in one or more embodiments of the present invention to be implemented.

Embodiments of the present invention further provide a computer-readable storage medium having stored therein a computer program. The computer program, when executed by a processor, causes the method as described in one or more embodiments of the present invention to be implemented.

In the embodiments of the present invention, the target radio frame is sent by the initiator. The target radio frame includes the target identification, and the target identification includes the polling information for the initiator to perform the WLAN sensing, thereby realizing a WLAN sensing process. Embodiments of the present invention provide the way of indicating the poll to realize the WLAN sensing.

Additional aspects and advantages of embodiments of disclosure will be given in part in the following descriptions, become apparent in part from the following descriptions, or be learned from the practice of the embodiments of the present invention.

### BRIEF DESCRIPTION OF THE DRAWINGS

In order to clearly illustrate technical solutions of embodiments of the present invention, a brief description of drawings used in embodiments is given below. The drawings in the following descriptions show only part embodiments of the present invention, and for those skilled in the art, other drawings can be obtained according to these drawings without creative work.
FIG. 1 is a flowchart of a communication method provided by an embodiment of the present invention;
FIG. 2 is a schematic diagram illustrating a first example according to an embodiment of the present invention;
FIG. 3 is a schematic diagram illustrating a first example according to another embodiment of the present invention;
FIG. 4 is a schematic diagram illustrating a first example according to a further embodiment of the present invention;
FIG. 5 is a flowchart of a communication method provided by another embodiment of the present invention;
FIG. 6 is a flowchart of a communication method provided by a further embodiment of the present invention;
FIG. 7 is a flowchart of a communication method provided by a further embodiment of the present invention;
FIG. 8 is a structural schematic diagram illustrating a communication apparatus provided by an embodiment of the present invention;
FIG. 9 is a structural schematic diagram illustrating a communication apparatus provided by another embodiment of the present invention;
FIG. 10 is a structural schematic diagram illustrating an electronic device provided by an embodiment of the present invention.

### DETAILED DESCRIPTION

Wording "and/or" in embodiments of the present invention describes an associated relationship of associated objects, and there may be three relationships. For example, A and/or B means that A exists alone, A and B exist at the same time, and B exists alone. A character "j" generally indicates that contextual objects are in an "or" relationship.

Wording "a plurality" in embodiments of the present invention refers to two or more, and other quantifiers are similar thereto.

Reference will be made clearly and completely technical solutions in the embodiments of the present invention with accompanying drawings. The embodiments described here are only some embodiments of the present invention and are not all embodiments of the present invention. Based on the embodiments of the present invention, other embodiments may be obtained by those skilled in the art without creative work, which are within scope of the present invention.

Embodiments of the present invention provides a communication method, a communication apparatus, an electronic device and a storage medium for providing the way of indicating the poll to realize the WLAN sensing.

The method and the apparatus are based on the same concept, and principles of the method and the apparatus for solving problems are similar, and thus implementations of the apparatus and the method may be referred to each other, and repeated details will not be elaborated.

Embodiments of the present invention provide a communication method. Optionally, the method may be applied to an initiator. The initiator (i.e., a sensing initiator) may be an access point (AP) or a client. For convenience of description, embodiments of the present invention will take the AP as an example of the initiator in the following description, but the embodiments of the present invention are not limited thereto.

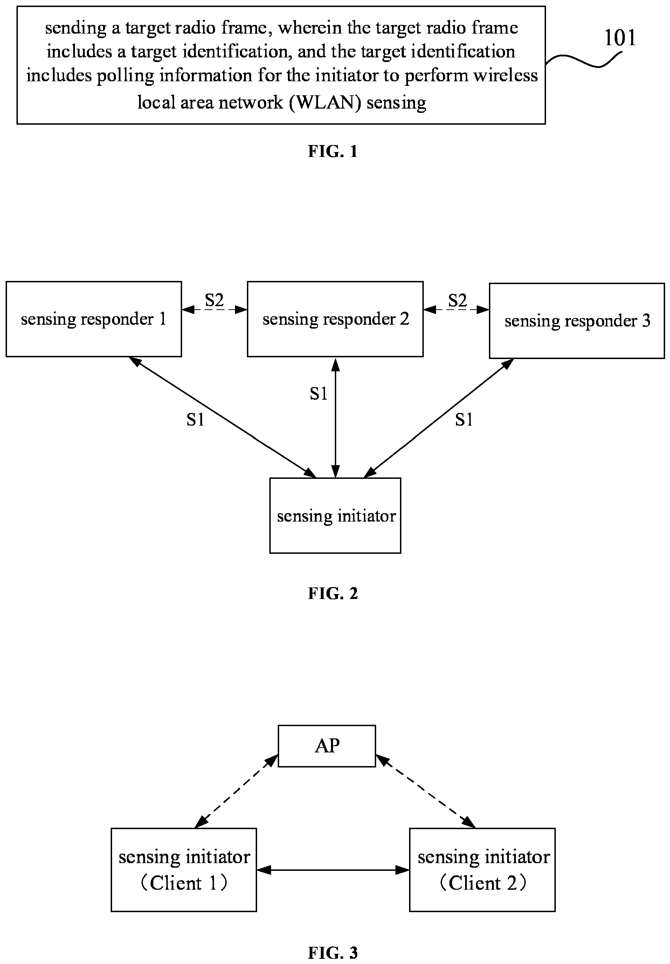

As shown in FIG. 1, the method may include the following step.

In block 101, a target radio frame is sent, where the target radio frame includes a target identification, and the target identification includes polling information for the initiator to perform wireless local area network (WLAN) sensing.

In a first example, referring to FIGS. 2 to 4, an architecture of the WLAN sensing, which the communication method is applied to, provided by embodiments of the present invention and a WLAN sensing process are described.

FIG. 2 shows a schematic diagram illustrating an architecture of the WLAN sensing. In FIG. 2, a sensing initiator initiates the WLAN sensing (for example, initiates a WLAN sensing session), and there may be multiple sensing responders responding thereto, such as a sensing responder 1, a sensing responder 2 and a sensing responder 3 as shown in FIG. 2. The sensing initiator communicates with the sensing responders via a communication connection, i.e. a communication connection S1 as shown, and the sensing responders communicate with each other via a communication connection S2.

Each sensing initiator may be a client, and each sensing responder (i.e. the sensing responder 1 to the sensing responder 3 in this example) may be a station device.

Another architecture is shown in FIG. 3, the sensing initiator and the sensing responder may both be the clients, and the two may communicate by connecting to the same AP. In FIG. 3, Client 1 is the sensing initiator, and Client 2 is the sensing responder.

Further, in a case that the sensing initiator initiates the WLAN sensing, associated or non-associated WLAN sensing responder(s) may respond. Herein, "associated" indicates that an associated connection for communication is established between the sensing initiator and the sensing responder, and "non-associated" indicates that the associated connection for the communication is not established between the sensing initiator and the sensing responder.

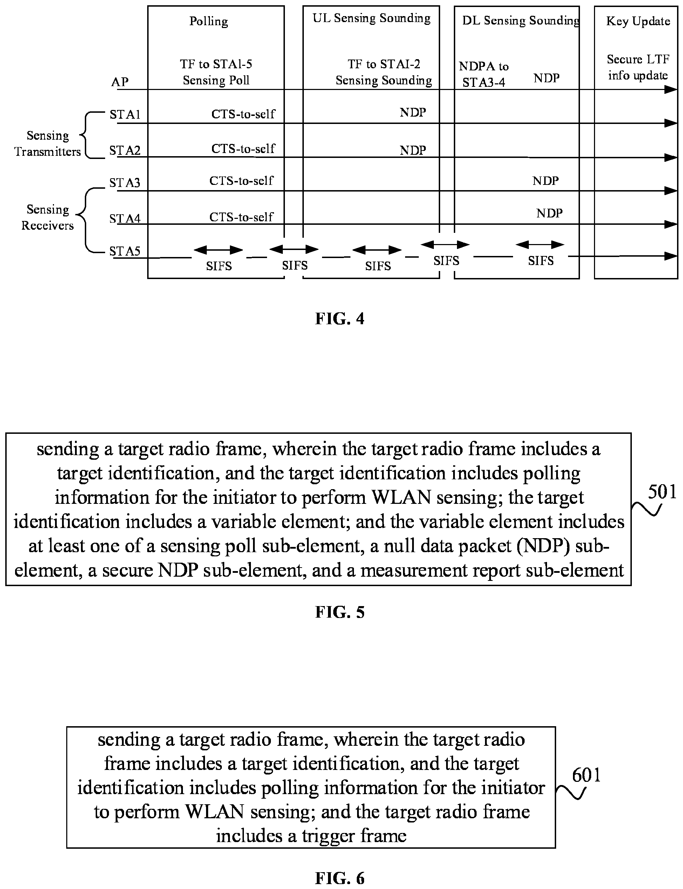

As shown in FIG. 4, in embodiments of the present invention, the WLAN sensing process may include: polling, uplink (UL) sensing sounding, downlink (DL) sensing sounding, and key update.

In the process of polling, a sensing initiator AP executes polling on the sensing initiators STA1 to STA5. Moreover, STA1 to STA2 as sensing transmitters shown in FIG. 4 and STA3 to STA4 as sensing receivers shown in FIG. 4 enable the CTS-to-self protection mechanism and also identify existence of a station.

In the process of UL sensing sounding, the sensing initiator AP performs the sensing sounding on STA1 and STA2. STA1 to STA2 respectively send a null data packet (NDP) frame, where the NDP includes a short training field (STF) and a long training field (LTF).

In the process of DL sensing sounding, the sensing initiator AP sends null data packet announcement (NDPA) to STA3 and STA4 and sends the NDP frame. STA3 and STA4 respectively send the NDP frame.

In the process of key update, the sensing initiator AP performs secure LTF information (info) update.

In the above processes, STA5, which is also the sensing receiver, sends a short interframe space (SIFS) frame, and the SIFS is used to space apart frames requiring an immediate response. A minimum interval is used between two transmissions of frame sequence exchange, to prevent other stations waiting for a medium from using the medium.

In the WLAN sensing process described above, a way of indicating the poll is needed, and in the embodiments of the present invention, the way of the poll is defined by the target radio frame.

Specifically, the initiator sends the target radio frame. Optionally, the target radio frame may be a trigger frame, and the trigger frame is used for scheduling a station and allocating a resource unit (RU). For example, in a transmission mechanism based on an orthogonal frequency division multiple access (OFDMA) technology, uplink transmission (UL-OFDMA) or downlink transmission (DL-OFDMA) utilizes the trigger frame to realize exchange of scheduling information among multi-user communications.

The target radio frame includes the target identification, and the target identification includes polling information for the initiator to perform the WLAN sensing. The polling information is used for the initiator to perform the WLAN sensing process, and the WLAN sensing process is as shown in FIG. 4. The target identification includes, for example, a data frame sent by the initiator in FIG. 4, such as the NDP.

Optionally, an indication field may be newly added in the target radio frame to indicate the target identification, and contents in the indication field are, for example, as shown in Table 1.

**Table 1**

| | |
|---|---|
| Ranging trigger subtype/WLAN sensing trigger subtype | Rest bits |

In Table 1, the target identification may be a ranging trigger subtype or a WLAN sensing trigger subtype, and the target identification may occupy some or all of rest bits of the target radio frame.

In the embodiments of the present invention, the target radio frame is sent by the initiator, where the target radio frame includes the target identification, and the target identification includes the polling information for the initiator to perform the WLAN sensing, thereby realizing the WLAN sensing process. Embodiments of the present invention provide the way of indicating the poll to implement the WLAN sensing. Moreover, the initiator and the responder send the trigger frame, and identifies that it occupies a subsequent transmission opportunity (TXOP), and resources (such as NDP) are allocated to the receiver for transmission, thereby reducing interference of the STA to other devices.

As shown in FIG. 5, embodiments of the present invention further provide a communication method. Optionally, the method may be applied to the initiator (i.e., the sensing initiator), and the initiator may be the access point device.

As shown in FIG. 5, the method may include the following step.

In block 501, the target radio frame is sent, where the target radio frame includes the target identification, and the target identification includes the polling information for the initiator to perform the WLAN sensing. The polling information is used for the initiator to perform the WLAN sensing process, and the WLAN sensing process is shown in FIG. 4. The target identification includes, for example, the data frame sent by the initiator in FIG. 4, such as the NDP.

The target radio frame may be the trigger frame.

The target identification includes a variable element; and the variable element includes at least one of a sensing poll sub-element, a null data packet (NDP) sub-element, a secure NDP sub-element, and a measurement report sub-element.

Optionally, the NDP sub-element may include an uplink NDP sub-element and/or a downlink NDP sub-element; the secure NDP sub-element includes an uplink secure NDP sub-element and/or a downlink secure NDP sub-element; and the measurement report sub-element includes an uplink measurement report sub-element and/or a downlink measurement report sub-element. In an example that the target radio frame is taken as the trigger frame, field values of subelements included in the variable element in the trigger frame are shown in Table 2.

**Table 2**

| Ranging/WLAN sensing trigger subtype field value | Ranging/WLAN sensing trigger frame subvariant |
|---|---|
| 5 | Sensing poll |
| 6 | NDP (UL and DL) |
| 7 | Secure NDP (UL and DL) |
| 8 | Measurement Report (UL and DL) |
| 9 to 15 | Reserved |

The field value may be a bit sequence, for example, the field value corresponding to the sensing poll sub-element is 5, and it indicates that the bit sequence of the sensing poll sub-element in the trigger frame is the fifth bit.

It may be understood that each element in Table 2 exists independently. The elements are listed in the same table, but they are not required to exist simultaneously as listed in the table. A value of an element is independent of a value of another element in Table 2. It will therefore be understood by those skilled in the art that the value of each element in Table 2 is an independent embodiment.

In an optional embodiment, the variable element is carried in a common info field of the target radio frame, for example, in a trigger dependent common info field of a ranging trigger frame.

In the embodiments of the present invention, the target radio frame is sent by the initiator, where the target radio frame includes the target identification, the target identification includes the variable element, the variable element includes the polling information for the initiator to perform the WLAN sensing, and the polling information includes at least one of the sensing poll sub-element, the NDP sub-element, the secure NDP sub-element, and the measurement report sub-element, thereby realizing the WLAN sensing process and reducing the interference to other devices.

In an optional embodiment, the target identification includes a control element, and the control element includes at least one of a presentation bit sub-element, a station identification sub-element, a poll sequence sub-element, a feedback mode sub-element, and a session identification sub-element.

Optionally, a control sub-field may be set in the target radio frame, and the control element is carried in the control sub-field. The control element is carried in a user info list field of the target radio frame. In an example, the target radio frame is taken as the trigger frame, the control sub-field may be a user info list field of the trigger frame.

The station identification sub-element includes information such as an association identifier (Association ID, AID), and its corresponding OFDMA RU required to send UL or DL NDP, and a spatial stream (SS) corresponding to a multiple-user multiple-input multiple-output (MU-MIMO).

The poll sequence sub-element is used to indicate a sequence of UL and DL, e.g. performing the polling for the UL and DL simultaneously.

The feedback mode sub-element is used to indicate a feedback mode of the polling, such as an immediate feedback or a delayed feedback.

The session identification sub-element, such as a WLAN sensing session ID, identifying a station needing to participate in the WLAN sensing session. Optionally, the WLAN sensing session ID may be negotiated in advance. Moreover, in a case that the session identification sub-element includes a session ID, a STA identifier may not be included, but information such as the sequence for sending the DL NDP and UL NDP may be included.

In an optional embodiment, the presentation bit sub-element includes at least one of a UL NDP presentation bit, a DL NDP presentation bit, a secure UL NDP presentation bit, a secure DL NDP presentation bit. The UL NDP presentation bit is used to identify the UL NDP to be sent by the responder of the target radio frame, the DL NDP presentation bit is used to identify the DL NDP to be sent by the responder of the target radio frame, the secure UL NDP presentation bit is used to identify an encrypted UL NDP to be sent by the responder of the target radio frame, and the secure DL NDP presentation bit is used to identify an encrypted DL NDP to be sent by the responder of the target radio frame.

In an optional embodiment, the target identification includes the variable element and the control element as described above.

As shown in FIG. 6, embodiments of the present invention further provide a communication method. Optionally, the method may be applied to the initiator (i.e., the sensing initiator), and the initiator may be the access point device.

As shown in FIG. 6, the method may include the following step.

In block 601, the target radio frame is sent, where the target radio frame includes the target identification, and the target identification includes the polling information for the initiator to perform the WLAN sensing; the target radio frame includes the trigger frame.

The trigger frame is used for scheduling the station and allocating the RU. For example, in the transmission mechanism of the OFDMA technology, the UL-OFDMA or the DL-OFDMA utilizes the trigger frame to realize the exchange of the scheduling information among the multi-user communications.

The target radio frame includes the target identification, and the target identification includes the polling information for the initiator to perform the WLAN sensing. The polling information is used for the initiator to perform the WLAN sensing process, and the WLAN sensing process is shown in FIG. 4. The target identification includes, for example, the data frame sent by the initiator in FIG. 4, such as the NDP.

As an example, a format of the trigger frame is as shown in Table 3 below.

**Table 3**

| Contents | Frame control | Duration | Receiving address (RA) | Transmitting address (TA) | Common Info | User Info list | Padding | Frame check sequence (FCS) |
|---|---|---|---|---|---|---|---|---|
| Octets | 2 | 2 | 6 | 6 | 8 or more | variable | variable | 4 |

The variable element may be carried in the common info, and the control element may be carried in the user info list field.

The field value may be the bit sequence, for example, the field value corresponding to the secure sounding sub-element is 2, and it indicates that the bit sequence of the secure sounding sub-element in the trigger frame is the second bit. The field values 5 to 15 may be used to carry the variable elements.

In an optional embodiment, the trigger frame includes a field of a receiving address (RA), and a frame format of the RA includes a broadcast frame format or a multicast frame format.

In an optional embodiment, embodiments of the present invention further provide a communication method. Optionally, the method may be applied to the initiator (i.e., the sensing initiator), and the initiator may be the access point device. The method includes: determining the target radio frame; and sending the target radio frame.

In this way, the target radio frame is determined (or generated) and is sent by the initiator, the target radio frame includes the target identification, and the target identification includes the polling information for the initiator to perform the WLAN sensing, thereby realizing the WLAN sensing process.

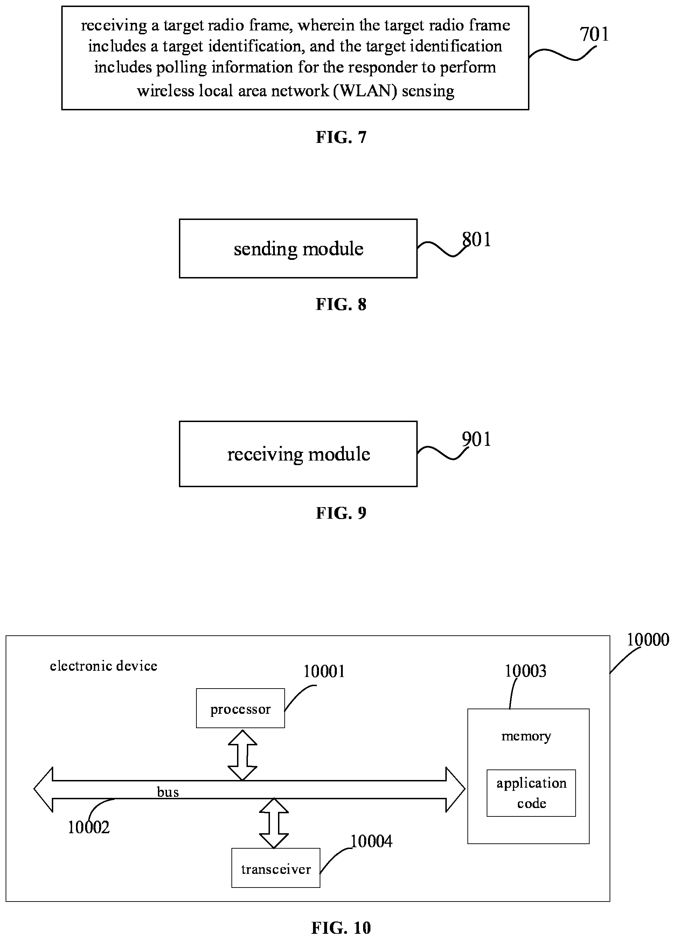

As shown in FIG. 7, embodiments of the present invention further provide a communication method applied to a responder (i.e. a sensing responder), where the responder may be a station device (STA) or other devices. For convenience of description, embodiments of the present invention will take the STA as an example of the responder in the following description, but the embodiments of the present invention are not limited thereto.

The method includes the following step.

In block 701, the target radio frame is received, where the target radio frame includes the target identification, and the target identification includes the polling information for the responder to perform the WLAN sensing.

FIG. 2 shows the schematic diagram illustrating the architecture of the WLAN sensing. In FIG. 2, the sensing initiator initiates the WLAN sensing (for example, initiates the WLAN sensing session), and there may be multiple sensing responders responding thereto, such as the sensing responder 1, the sensing responder 2 and the sensing responder 3 as shown in FIG. 2. The sensing initiator communicates with the sensing responders via the communication connection, i.e. the communication connection S1 as shown, and the sensing responders communicate with each other via the communication connection S2.

Each sensing initiator may be the client, and each sensing responder may be the station device.

Another architecture is shown in FIG. 3, the sensing initiator and the sensing responder may both be the clients, and the two may communicate by connecting to the same AP. In FIG. 3, Client 1 is the sensing initiator, and Client 2 is the sensing responder.

Further, in a case that the sensing initiator initiates the WLAN sensing, associated or non-associated WLAN sensing responder(s) may respond. Herein, "associated" indicates that an associated connection for communication is established between the sensing initiator and the sensing responder, and "non-associated" indicates that the associated connection for the communication is not established between the sensing initiator and the sensing responder.

As shown in FIG. 4, in embodiments of the present invention, the WLAN sensing process may include: the polling, the uplink (UL) sensing sounding, the downlink (DL) sensing sounding, and the key update.

In the process of the polling, the sensing initiator AP executes the process of polling on the sensing initiators STA1 to STA5. Moreover, STA1 to STA2 as the sensing transmitters shown in FIG. 4, and STA3 to STA4 as the sensing receivers shown in FIG. 4 enable the CTS-to-self protection mechanism and also identify existence of the station.

In the process of the UL sensing sounding, the sensing initiator AP performs the sensing sounding on STA1 and STA2. STA1 to STA2 respectively send the NDP frame, where the NDP includes the STF and the LTF.

In the process of the DL sensing sounding, the sensing initiator AP sends the NDPA to STA3 and STA4 and sends the NDP frame. STA3 and STA4 respectively send the NDP frame.

In the process of the key update, the sensing initiator AP performs the secure LTF info update.

In the above processes, STA5, which is also the sensing receiver, sends the SIFS frame, and the SIFS is used to space apart the frames requiring the immediate response. The minimum interval is used between the two transmissions of the frame sequence exchange, to prevent other stations waiting for a medium from using the medium.

In the WLAN sensing process described above, the way of indicating the poll is needed, and in the embodiments of the present invention, the way of the poll is defined by the target radio frame.

The responder receives the target radio frame, and performs the WLAN sensing according to the target identification. Optionally, the target radio frame may be the trigger frame, and the trigger frame is used for scheduling the station and allocating the RU. For example, in the transmission mechanism based on the OFDMA technology, the UL-OFDMA or the DL-OFDMA utilizes the trigger frame to realize the exchange of the scheduling information among the multi-user communications.

The target radio frame includes the target identification, and the target identification includes the polling information for the responder to perform the WLAN sensing. The polling information is used for the initiator to perform the WLAN sensing process, and the WLAN sensing process is as shown in FIG. 4. The target identification includes, for example, the data frame sent by the initiator in FIG. 4, such as the NDP.

Optionally, the indication field may be newly added in the target radio frame to indicate the target identification, and the contents in the indication field are, for example, as shown in Table 1.

**Table 1**

| | |
|---|---|
| Ranging trigger subtype/WLAN sensing trigger subtype | Rest bits |

In Table 1, the target identification may be the ranging trigger subtype or the WLAN sensing trigger subtype, and the target identification may occupy some or all of the rest bits of the target radio frame.

In embodiments of the present invention, the responder receives the target radio frame, and performs the WLAN sensing according to the target identification, where the target radio frame includes the target identification, and the target identification includes the polling information for the initiator to perform the WLAN sensing, thereby realizing the WLAN sensing process. Embodiments of the present invention provide the way of indicating the poll to realize the WLAN sensing.

In an optional embodiment, the target identification includes the variable element, and the variable element includes at least one of the sensing poll sub-element, the NDP sub-element, the secure NDP sub-element, and the measurement report sub-element.

Optionally, the NDP sub-element may include the uplink NDP sub-element and/or the downlink NDP sub-element; the secure NDP sub-element includes the uplink secure NDP sub-element and/or the downlink secure NDP sub-element; and the measurement report sub-element includes the uplink measurement report sub-element and/or the downlink measurement report sub-element.

In an optional embodiment, the variable element is carried in the common info field of the target radio frame, for example, in the trigger dependent common info field of the ranging trigger frame.

In an optional embodiment, the target identification includes the control element, and the control element includes at least one of the presentation bit sub-element, the station identification sub-element, the poll sequence sub-element, the feedback mode sub-element, and the session identification sub-element.

Optionally, the control sub-field may be set in the target radio frame, and the control element is carried in the control sub-field. The control element is carried in the user info list field of the target radio frame. In an example that the target radio frame is taken as the trigger frame, the control sub-field may be the user info list field of the trigger frame.

The station identification sub-element includes information such as the AID, and its corresponding OFDMA RU required to send UL or DL NDP, and the SS corresponding to the MU-MIMO.

The poll sequence sub-element is used to indicate the sequence of the UL and the DL, e.g. performing the polling for the UL and the DL simultaneously.

The feedback mode sub-element is used to indicate the feedback mode of the polling, such as the immediate feedback or the delayed feedback.

The session identification sub-element, such as the WLAN sensing session ID, identifying the station needing to participate in the WLAN sensing session. Optionally, the WLAN sensing session ID may be negotiated in advance. Moreover, in the case that the session identification sub-element includes the session ID, the STA identifier may not be included, but information such as the sequence for sending the DL NDP and UL NDP may be included.

In an optional embodiment, the presentation bit sub-element includes at least one of the UL NDP presentation bit, the DL NDP presentation bit, the secure UL NDP presentation bit, the secure DL NDP presentation bit.

The UL NDP presentation bit is used to identify the UL NDP to be sent by the responder of the target radio frame, the DL NDP presentation bit is used to identify the DL NDP to be sent by the responder of the target radio frame, the secure UL NDP presentation bit is used to identify the encrypted UL NDP to be sent by the responder of the target radio frame, and the secure DL NDP presentation bit is used to identify the encrypted DL NDP to be sent by the responder of the target radio frame.

In an optional embodiment, the control element is carried in the user info list field of the target radio frame.

In an optional embodiment, the target identification includes the variable element and the control element.

In an optional embodiment, the target radio frame includes the trigger frame. The trigger frame is used for scheduling the station and allocating the RU. For example, in the transmission mechanism of OFDMA technology, the UL-OFDMA or the DL-OFDMA utilizes the trigger frame to realize the exchange of the scheduling information among the multi-user communications.

In an optional embodiment, the trigger frame includes the RA field; and the frame format of the RA includes the broadcast frame format or the multicast frame format.

In embodiments of the present invention, the responder receives the target radio frame, and performs the WLAN sensing according to the target identification, where the target radio frame includes the target identification, and the target identification includes the polling information for the initiator to perform the WLAN sensing, thereby realizing the WLAN sensing process.

Based on the same principle as the method in the embodiments of the present invention, embodiments of the present invention further provide a communication apparatus, applied to an initiator, where the initiator (i.e. a sensing initiator) may be an access point device or a client. As shown in FIG. 8, the apparatus includes a sending module 801 configured to send a target radio frame, where the target radio frame includes a target identification, and the target identification includes polling information for the initiator to perform WLAN sensing.

Referring to FIGS. 2 to 4, the architecture of the WLAN sensing and the WLAN sensing process applied to the communication method provided by embodiments of the present invention are described. Details may be referred to the foregoing embodiments, which will not be elaborated here. In the WLAN sensing process described above, there is a need to provide a way of indicating the poll, and in embodiments of the present invention, the way of the poll is defined by the target radio frame.

Specifically, the initiator sends the target radio frame. Optionally, the target radio frame may be a trigger frame, and the trigger frame is used for scheduling a station and allocating a RU. For example, in a transmission mechanism based on an OFDMA technology, UL-OFDMA or DL-OFDMA utilizes the trigger frame to realize exchange of scheduling information among multi-user communications.

The target radio frame includes the target identification, and the target identification includes polling information for the initiator to perform the WLAN sensing. The polling information is used for the initiator to perform the WLAN sensing process, and the WLAN sensing process is as shown in FIG. 4. The target identification includes, for example, a data frame sent by the initiator in FIG. 4, such as the NDP.

Optionally, in embodiments of the present invention, the target identification includes a variable element, and the variable element includes at least one of a sensing poll sub-element, a null data packet (NDP) sub-element, a secure NDP sub-element, and a measurement report sub-element.

Optionally, in embodiments of the present invention, the variable element is carried in a common information field of the target radio frame.

Optionally, in embodiments of the present invention, the target identification includes a control element, and the control element includes at least one of a presentation bit sub-element, a station identification sub-element, a poll sequence sub-element, a feedback mode sub-element, and a session identification sub-element.

Optionally, in embodiments of the present invention, the presentation bit sub-element includes at least one of an UL NDP presentation bit, a DL NDP presentation bit, a secure UL NDP presentation bit, a secure DL NDP presentation bit.

Optionally, in embodiments of the present invention, the control element is carried in a user info list field of the target radio frame.

Optionally, in embodiments of the present invention, the target radio frame includes a trigger frame.

Optionally, in embodiments of the present invention, the trigger frame includes a field of a RA, and a frame format of the RA includes a broadcast frame format or a multicast frame format.

Optionally, in embodiments of the present invention, the apparatus includes a determining module configured to determine the target radio frame.

In embodiments of the present invention, the target radio frame is sent by the sending module 801, where the target radio frame includes the target identification, and the target identification includes the polling information for the initiator to perform the WLAN sensing, thereby realizing the WLAN sensing process.

Based on the same principle as the method shown in the embodiments of the present invention, embodiments of the present invention further provides a communication apparatus, applied to a responder. As shown in FIG. 9, the apparatus includes a receiving module 901 configured to receive a target radio frame, where the target radio frame includes a target identification, and the target identification includes polling information for the responder to perform WLAN sensing.

Referring to FIGS. 2 to 4, the architecture of the WLAN sensing and the WLAN sensing process applied to the communication method provided by embodiments of the present invention are described. Details may be referred to the foregoing embodiments, which will not be elaborated here. In the WLAN sensing process described above, there is a need to provide a way of indicating the poll, and in embodiments of the present invention, the way of the poll is defined by the target radio frame.

The responder receives the target radio frame, and performs the WLAN sensing according to the target identification. Optionally, the target radio frame may be a trigger frame, and the trigger frame is used for scheduling a station and allocating a RU. For example, in a transmission mechanism based on an OFDMA technology, UL-OFDMA or DL-OFDMA utilizes the trigger frame to realize exchange of scheduling information among multi-user communications.

The target radio frame includes the target identification, and the target identification includes the polling information for the responder to perform the WLAN sensing. The polling information is used for the initiator to perform the WLAN sensing process, and the WLAN sensing process is as shown in FIG. 4. The target identification includes, for example, a data frame sent by the initiator in FIG. 4, such as the NDP.

Optionally, in embodiments of the present invention, the target identification includes a variable element, and the variable element includes at least one of a sensing poll sub-element, a NDP sub-element, a secure NDP sub-element, and a measurement report sub-element.

Optionally, in embodiments of the present invention, the variable element is carried in a common info field of the target radio frame.

Optionally, in embodiments of the present invention, the target identification includes a control element, and the control element includes at least one of a presentation bit sub-element, a station identification sub-element, a poll sequence sub-element, a feedback mode sub-element, and a session identification sub-element.

Optionally, in embodiments of the present invention, the presentation bit sub-element includes at least one of an UL NDP presentation bit, a DL NDP presentation bit, a secure UL NDP presentation bit, a secure DL NDP presentation bit.

Optionally, in embodiments of the present invention, the control element is carried in a user info list field of the target radio frame.

Optionally, in embodiments of the present invention, the target radio frame includes a trigger frame.

Optionally, in embodiments of the present invention, the trigger frame includes a field of a RA, and a frame format of the RA includes a broadcast frame format or a multicast frame format.

In embodiments of the present invention, the receiving module 901 receives the target radio frame, and performs the WLAN sensing according to the target identification, where the target radio frame includes the target identification, and the target identification includes the polling information for the initiator to perform the WLAN sensing, thereby realizing the WLAN sensing process. The embodiments of the present invention provide the way of indicating the poll to realize the WLAN sensing.

In an optional embodiment, embodiments of the present invention further provide an electronic device. As shown in FIG. 10, the electronic device 10000 shown in FIG. 10 may be a server, including a processor 10001 and a memory 10003. The processor 10001 is coupled to the memory 10003, such as through a bus 10002. Optionally, the electronic device 10000 may further include a transceiver 10004. It should be noted that the transceiver 10004 is not limited to one transceiver in practical applications, and a structure of the electronic device 10000 does not constitute a limitation on the embodiments of the present invention.

The processor 10001 may be a central processing unit (CPU), a general-purpose processor, a digital signal processor (DSP), an application specific integrated circuit (ASIC), a field programmable gate array (FPGA), or other programmable logic device, a transistor logic device, a hardware component, or any combination thereof. It may implement or execute the various logical blocks, modules and circuits described in the present invention. The processor 10001 may be an assembly that implements computing functions, such as a combination of one or more microprocessors, or a combination of the DSP and the microprocessor.

The bus 10002 may include a path that transmits information between the above-mentioned components. The bus 10002 may be a peripheral component interconnect (PCI) bus or an extended industry standard architecture (EISA) bus. The bus 10002 may be classified as an address bus, a data bus, or a control bus. For ease of illustration, the bus is presented by one thick line as shown in FIG. 10, but it does not mean that there is only one bus or one type of bus.

The memory 10003 may be a read only memory (ROM) or other types of static storage device that is able to store static information and instructions, a random access memory (RAM) or other types of dynamic storage device that is able to store information and instructions, or may be an electrically erasable programmable read-only memory (EEPROM), a compact disc ROM (CD-ROM) or other type of CD storages (including a compact disk, a laser disk, an optical disk, a digital versatile disk, a blue-ray disk), magnetic disk storage media or other magnetic storage devices, or any other media that may be used to carry or store desired program codes in the form of instructions or data structures and which may be accessed by a computer, which is not limited thereto.

The memory 10003 is configured to store application codes that are executed and controlled by the processor 10001 to implement solutions of the present invention. The processor 10001 is configured to execute the application codes stored in the memory 10003 to implement the foregoing method embodiments.

The electronic devices include, but are not limited to, a mobile terminal such as a mobile phone, a notebook computer, a digital broadcast receiver, a personal digital assistant (PDA), a tablet computer (PAD), a portable multimedia player (PMP), and an in-vehicle terminal (e.g. an in-vehicle navigation terminal), and a fixed terminal such as a digital TV, and a desktop computer. The electronic device shown in FIG. 10 is only one example and shall not be construed to limit the function and application scope of the embodiments of the present invention.

The server provided by the present invention may be an independent physical server, may also be a server cluster or a distributed system composed of multiple physical servers, and may also be a cloud server providing basic cloud computing services, such as a cloud service, a cloud database, a cloud calculation, a cloud function, a cloud storage, a network service, a cloud communication, a middleware service, a domain name service, a security service, a content delivery network (CDN), and a big data and artificial intelligence platform. The terminal may be, but is not limited to, a smart phone, a tablet computer, a notebook computer, a desktop computer, a smart speaker box, a smart watch, etc. The terminal and the server may be directly or indirectly connected by wired or wireless communication, which is not limited in the present invention.

Embodiments of the present invention disclose a computer-readable storage medium having stored thereon a computer program that, when executed on the computer, enables the computer to perform the corresponding steps of the foregoing method embodiments.

It should be understood that, the various steps in the flowcharts may be connected in sequence with arrows, the steps are not necessarily performed in the sequence indicated by the arrows. The steps are performed in no strict sequence unless explicitly stated herein, and may be performed in other sequences. Moreover, at least some of the steps in the flowcharts may include sub-steps or stages which are not necessarily performed at the same time, and may be performed at different times. The sub-steps or stages may not necessarily be executed in sequence, but may be performed in turn or in alternative manner with other steps or at least some of the sub-steps or stages of other steps.

It should be noted that the computer-readable medium described above in the present invention may be either a computer-readable signal medium or a computer-readable storage medium or any combination thereof. The computer readable storage medium may be, such as, but not limited to an electronic, magnetic, optical, electromagnetic, infrared, or semiconductor system, apparatus or device, or any suitable combination thereof. More specific examples (a non-exhaustive list) of the computer readable storage medium may include: an electrical connection having one or more wires, a portable computer diskette, a hard disk, a random access memory (RAM), a read-only memory (ROM), an erasable programmable read-only memory (EPROM) or a flash memory, an optical fiber, a portable compact disc read-only memory (CD-ROM), an optical memory device, a magnetic memory device, or any suitable combination thereof. In this document, the computer readable storage medium may be any tangible medium that contains or stores a program. The program may be used by or in conjunction with an instruction execution system, apparatus or device. In the present invention, the computer readable signal medium may include a data signal transmitted in the baseband or as a part of a carrier, in which computer readable program codes are carried. The transmitted data signal may employ a plurality of forms, including but not limited to, an electromagnetic signal, a light signal or any suitable combination thereof. The computer readable signal medium may further be any computer readable medium other than the computer readable storage medium. The computer readable medium may send, propagate or transmit programs configured to be used by or in combination with an instruction execution system, apparatus or device. The program codes included in the computer readable medium may be transmitted by any appropriate medium, including but not limited to wireless, electric wire, optical cable, radio frequency (RF), or any suitable combination thereof.

The computer-readable medium may be included in the electronic device, or it may exist independently without being assembled into the electronic device.

The computer-readable medium carries one or more programs which, when executed by the electronic device, enable the electronic device to perform the methods of the embodiments described above.

According to one aspect of the present invention, a computer program product or a computer program is provided, including computer instructions stored in the computer-readable storage medium. The processor of the computer device reads the computer instructions from the computer-readable storage medium, and the processor executes the computer instructions to enable the computer device to perform the communication method provided in the various alternative implementations described above.

The computer program codes for executing operations of the present invention may be programmed using one or more programming languages or combination thereof. The programming languages include object-oriented programming languages, such as Java, Smalltalk, C++, and include conventional procedural programming languages, such as the C programming language or similar programming languages. The program codes may be executed entirely on a user computer, partly on the user computer, as a stand-alone software package, partly on the user computer and partly on a remote computer, or entirely on the remote computer or server. In the scenario involving the remote computer, the remote computer may be connected to the user computer through any type of network, including a local area network (LAN) or a wide area network (WAN), or may be connected to an external computer (for example, through the Internet using an Internet service provider).

The flowcharts and the block diagrams in the accompanying drawings illustrate the architecture, functions and operations of possible implementations of systems, methods and computer program products according to a plurality of embodiments of the present invention. Each block in the flow chart or the block diagram may represent a module, a program segment, or a part of code. The module, the program segment or the part of code contains one or more executable instructions for implementing specified logical functions. In some alternative implementations, the functions noted in the blocks may also occur in a sequence different from those noted in the accompanying drawings. For example, two consecutive blocks may actually be executed in substantially parallel, and sometimes may be executed in a reverse sequence, which depends on the functions involved. It should also be noted that, each block in the block diagram and/or the flow chart, and the combination of blocks in the block diagram and/or the flow chart, may be implemented with a dedicated hardware-based system for performing specified functions or actions, or may be implemented with a combination of dedicated hardware and computer instructions.

The modules involved in embodiments of the present invention may be implemented in software or hardware. The name of the module does not in some cases constitute a limitation on the module itself, for example, a module A may also be described as "a module A for performing a B operation".

The foregoing description is only for explanation of the embodiments and the principles of the technology employed in the present invention. It should be understood by those skilled in the art that the scope of the present invention is not limited to the particular combination of features described above, but is intended to cover other combinations of features described above or their equivalents without departing from the spirit of the present invention, for example, a technical solution formed by replacing the above-mentioned features with the technical features disclosed in the present invention having (but not limited to) similar functions.

## Claims

1. A communication method, applied to an initiator, comprising:
sending a target radio frame, wherein the target radio frame comprises a target identification, and the target identification comprises polling information for the initiator to perform wireless local area network, WLAN, sensing.

2. The communication method of claim 1, wherein the target identification comprises a variable element; and
the variable element comprises at least one of a sensing poll sub-element, a null data packet, NDP, sub-element, a secure NDP sub-element, and a measurement report sub-element.

3. The communication method of claim 2, wherein the variable element is carried in a common information field of the target radio frame.

4. The communication method of claim 1, wherein the target identification comprises a control element; and
the control element comprises at least one of a presentation bit sub-element, a station identification sub-element, a poll sequence sub-element, a feedback mode sub-element, and a session identification sub-element.

5. The communication method of claim 4, wherein the presentation bit sub-element comprises at least one of an uplink, UL, NDP presentation bit, a downlink, DL, NDP presentation bit, a secure UL NDP presentation bit, a secure DL NDP presentation bit.

6. The communication method of claim 4, wherein the control element is carried in a user information list field of the target radio frame.

7. The communication method of claim 1, wherein the target radio frame comprises a trigger frame.

8. The communication method of claim 7, wherein the trigger frame comprises a field of a receiving address, RA; and
a frame format of the RA comprises a broadcast frame format or a multicast frame format.

9. The communication method of any one of claims 1 to 8, wherein before sending the target radio frame, the method comprises:
determining the target radio frame.

10. A communication method, applied to a responder, comprising:
receiving a target radio frame, wherein the target radio frame comprises a target identification, and the target identification comprises polling information for the responder to perform WLAN sensing.

11. The communication method of claim 10, wherein the target identification comprises a variable element; and
the variable element comprises at least one of a sensing poll sub-element, an NDP sub-element, a secure NDP sub-element, and a measurement report sub-element.

12. The communication method of claim 11, wherein the variable element is carried in a common information field of the target radio frame.

13. The communication method of claim 10, wherein the target identification comprises a control element; and
the control element comprises at least one of a presentation bit sub-element, a station identification sub-element, a poll sequence sub-element, a feedback mode sub-element, and a session identification sub-element.

14. The communication method of claim 13, wherein the presentation bit sub-element comprises at least one of an UL NDP presentation bit, a DL NDP presentation bit, a secure UL NDP presentation bit, a secure DL NDP presentation bit.

15. The communication method of claim 13, wherein the control element is carried in a user information list field of the target radio frame.

16. The communication method of claim 10, wherein the target radio frame comprises a trigger frame.

17. The communication method of claim 16, wherein the trigger frame comprises a field of an RA; and
a frame format of the RA comprises a broadcast frame format or a multicast frame format.

18. A communication apparatus, applied to an initiator, comprising:
a sending module configured to send a target radio frame, wherein the target radio frame comprises a target identification, and the target identification comprises polling information for the initiator to perform WLAN sensing.

19. A communication device, applied to a responder, comprising:
a receiving module configured to receive a target radio frame, wherein the target radio frame comprises a target identification, and the target identification comprises polling information for the responder to perform WLAN sensing.

20. An electronic device, comprising:
a memory;
a processor; and
a computer program stored in the memory and executable on the processor,
wherein the computer program, when executed by the processor, implements the method of any one of claims 1 to 17.

21. A computer-readable storage medium having stored therein a computer program, wherein the computer program, when executed by a processor, implements the method of any one of claims 1 to 17.
